# EUROPEAN PATENT APPLICATION

(11) **EP 4 439 359 A1**
(43) Date of publication of application: **02.10.2024**
(21) Application number: 23164496.4
(22) Date of filing: 27.03.2023
(51) Int. Cl.: G06F 21/62, G06F 21/60, H04L 9/08

(54) **SYSTEM AND METHOD FOR ENTITY ATTRIBUTE BASED ACCESS TO DATA**

(71) Applicant: THALES DIS CPL USA, INC, Austin TX 78759 (US)
(72) Inventor: SINGH, Ramandeep, 282001 Uttar Pradesh (IN); KUMAR, Sharvan, 110043 New Delhi (IN)
(74) Representative: Lotaut, Yacine Diaw

(57) **Abstract**

A system and method of providing data privacy compliance at one or more servers can include one or more processors and memory coupled to the one or more processors where the memory includes computer instructions which when executed by the one or more processors causes the one or more processors at the server to perform certain operations. The operations can include receiving a request to store data of a user who is an owner of the data, receiving a list of contexts, a timestamp, and a validity period for the data, encrypting the data using a signed token containing the timestamp, the list of contexts, a name of the owner, and the validity period to provide encrypted data, and saving the encrypted data at the one or more servers for subsequent access using attribute based decryption.

## Description

### CROSS-REFERENCE TO RELATED APPLICATIONS

Not applicable.

### TECHNICAL FIELD

The present disclosure generally relates to data privacy compliance. More particularly, but not exclusively, the present disclosure relates to use of encryption keys and multiple attribute based access to data for providing enhanced data privacy compliance.

### BACKGROUND

Traditional PKI models for securing devices and messages between ever-increasing multitudes of devices fail to be flexible and secure in terms of privacy. They also fail to provide an easy way to comply with various privacy laws and standards. There are situations where it is desirable to selectively render inaccessible certain data contained in fields of stored data records. For instance, in the United States HIPPA (Health Insurance Portability and Accountability Act) regulations require that a person's health-related data be kept confidential and not disclosed except to authorized entities. In another example, to protect the privacy of individuals, the European Union established GDPR or the General Data Protection Regulation in May 2018. GDPR regulates organizations to protect personal information collected and instructs them to erase it under "Right to be forgotten" when it is no longer required or when requested by the Data owner or Data Subject. However, the organizations do not have a solution that ensures all the data collected, stored, and distributed is secure and can be removed at the owner's request or at their control.

The right to be forgotten has been defined as the right to silence on past events in life that are no longer occurring, and leads to allowing individuals to have information, videos or photographs about themselves deleted from certain internet records so that they cannot be found by search engines. Personal data must be erased immediately where the data are no longer needed for their original processing purpose, or the data subject has withdrawn consent and there is no other legal ground for processing, the data subject has objected and there are no overriding legitimate grounds for the processing, or erasure is required to fulfill a statutory obligation under the EU law. This right to be forgotten requires holders of a person's private personal data such as names, identification numbers, financial and social security information, credit card data, etc., to erase all or particular parts of such data from data records upon request of the person so that the data are inaccessible. This applies not only to production copies of the data, but also to data residing in all backup copies as well. The penalties on holders of private personal data for failure to comply may be severe.

This requirement to delete a user's personal data, and similar other requirements to make inaccessible certain types of data, poses a complex challenge to organizations which hold both primary and secondary copies of relevant data. Personal data are typically stored in particular predetermined fields of a user's record in a database. Organizations can implement with reasonable effort personal data erasure in a production database by accessing a user's record and either deleting or altering them by overwriting the private data fields with arbitrary or random data. However, it is a bigger challenge to erase or delete these fields in all other copies of the database that are stored as backups on the same or on another storage system, and on disaster recovery copies in another location. There is no easy way to access and delete or alter specific records in database secondary copies which does not require accessing all such copies. To delete these other copies of data, the database copies must be presented by the backup/data recovery system and either attached to a database host for deletion of the relevant data fields, or a special tool must be used for changing these data fields without a database host. Where the copies are at a remote site, or reside on tape with no immediate physical access and must be delivered to a facility where they can be mounted and processed, it is an even more complex and resource-intensive endeavor, especially where the remote copies are stored in a cloud. Such approaches are far too complex and challenging to be acceptable to most organizations.

When data is stored in the cloud, traditional firewalls are not able to effectively control the downloading and uploading of data. Data security depends on users' credentials. An attacker can gain access to a host by exploiting an application or operating system vulnerability, manipulating a user, leveraging stolen credentials, or taking advantage of lax security practices. Usage anomalies, such as an employee downloading, sharing, or uploading data from an app excessively or logins from multiple locations can indicate compromised credentials. In one example, alerting on new or rare authentication activity identifies compromised credentials. These usage anomalies can indicate out-of-compliance behaviors and even the presence of malware. Besides not truly having control of their own data, such instances can also leave a data subject out of controlling their right to privacy including their ability to enforce their right to be forgotten.

Users share a lot of personal data with cloud service providers for various purposes, whether they are creating their profile on their webpages or leveraging any service from the cloud service providers. The User's data once stored on a third party cloud provider server will generally then be in the sole custody of the provider. The users on the other hand have no control of the data and they don't have any information of what's being done with their data other than the purpose that it was stored for. The cloud provider on the other hand needs to comply with various compliance standards for handling Personal Identifiable Information (PII) data under standards such as General Data Protection Regulation (GDPR) and California Consumer Privacy Act (CCPA).

US Patent No. 11151280 issued on October 19, 2021 to assignee EMC Corp. entitled "Simplified deletion of personal private data in cloud backup storage for GDPR compliance" discloses a public cloud that stores data in a database system for a plurality of entities as primary data and as one or more secondary backup copies of the primary data, the data being stored in predefined data fields of data records, personal private data of each entity is stored encrypted using an encryption/decryption key that is unique to each different entity. The encryption/decryption keys are stored in the cloud in a key store of a key management system. To delete the personal private data of a particular entity, as to comply with the right to be forgotten pursuant to GDPR regulations, or otherwise, the encryption/decryption key for that particular entity is deleted from the key store to render permanently inaccessible all copies of that entity's personal private data. Unfortunately, keys can be compromised in such a system and such a system lacks total control of personal data by the data owner.

A data owner may request directly from an organization to remove their data. However, it does not ensure that all the primary and secondary copies of the data have or will be removed.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a method of providing data privacy compliance at one or more servers, can include one or more processors and memory coupled to the one or more processors where the memory includes computer instructions which when executed by the one or more processors causes the one or more processors at the server to perform certain operations. The operations can include receiving a request to store data of a user who is an owner of the data, receiving a list of contexts, a timestamp, and a validity period for the data, encrypting the data using a signed token containing the timestamp, the list of contexts, a name of the owner, and the validity period to provide encrypted data, and saving the encrypted data at the one or more servers for subsequent access using attribute based decryption.

In some embodiments, the data is Personal Identifiable Information (PII) of a user owning the PII.

In some embodiments, an application requests storage of the data to a Policy Sever specifying the name of the owner and the list of contexts for intended use of the data. In some embodiments, the Policy Server sends the name of the owner, list of contexts, the timestamp, and the validity period for the data to an Identity and Access Management (IAM) application. In some embodiments, the IAM application is stored on a cloud server or in-premises server via a phone application, which is used by the user to approve or deny the request. In some embodiments, the IAM application sends the signed token to the Policy Server if the user approves the request and if the user issues a denial to the request, the denial is propagated to the application. In some embodiments, the Policy Server requests a crypto module to encrypt the data using attributes in the signed token if the user approves the request and the crypto module encrypts the data using the attributes in the signed token using Attribution Based Encryption (ABE). In some embodiments, the Policy Server saves a ciphertext, a data ID, and the signed token in a database and informs the application that the encrypted data is saved.

In some embodiments, the method further comprises the steps of accessing the encrypted data by requesting access to the encrypted data by the application to the Policy Server by specifying the data ID and contexts specified in the list of contexts, fetching by the Policy Server the ciphertext and signed token from the database, requesting by the Policy Server for decryption of the encrypted data using the crypto module, decrypting the encrypted data by the crypto module to valid plain text if conditions are met for at least the contexts specified in the list of contexts, user consent, and the validity period, and passing the valid plain text to the application via the Policy Server.

In some embodiments, the method further comprises the steps of revoking consent by receving a user request to revoke consent at the Policy Server, fetching by the Policy Server the signed token for the user from the database, sending by the Policy Server the signed token and the name of the owner to the IAM application, sending the user request to revoke consent by the IAM application to the phone application of the user, creating a new signed token with consent set to FALSE, a new timestamp, and a validity period set to 0 if the user approves the user request to revoke consent or propagating a denial from the user through the IAM application and Policy Server if the user denies the user request to revoke consent, and replacing by the Policy Server the signed token with the new signed token in the database.

In some embodiments, a system of providing data privacy compliance at one or more servers can include one or more processors and memory coupled to the one or more processors, wherein the memory includes computer instructions which when executed by the one or more processors causes the one or more processors at the one or more servers to perform certain operations. The operations can include receiving a request to store data of a user who is an owner of the data, receiving a list of contexts, a timestamp, and a validity period for the data, encrypting the data using a signed token containing the timestamp, the list of contexts, a name of the owner, and the validity period to provide encrypted data, and saving the encrypted data at the one or more servers for subsequent access using attribute based decryption.

In some embodiments, the system further includes operations of accessing the encrypted data by requesting access to the encrypted data by an application to a Policy Server by specifying a data ID and contexts specified in the list of contexts, fetching by the Policy Server a ciphertext and signed token from a database, requesting by the Policy Server for decryption of the encrypted data using a crypto module, decrypting the encrypted data by the crypto module to valid plain text if conditions are met for at least the contexts specified in the list of contexts, user consent, and the validity period, and passing the valid plain text to the application via the Policy Server.

In some embodiments, the system further includes the steps of revoking consent by receving a user request to revoke consent at a Policy Server, fetching by the Policy Server the signed token for the user from a database, sending by the Policy Server the signed token and the name of the owner to a Identity and Access Management (IAM) application, sending the user request to revoke consent by the IAM application to the phone application of the user, creating a new signed token with consent set to FALSE, a new timestamp, and a validity period set to 0 if the user approves the user request to revoke consent or propagating a denial from the user through the IAM application and Policy Server if the user denies the user request to revoke consent, and replacing by the Policy Server the signed token with the new signed token in the database.

In some embodiments, a system of providing data privacy compliance includes one or more processors and memory coupled to the one or more processors, where the memory includes computer instructions which when executed by the one or more processors causes the one or more processors at one or more servers to perform certain operations at one or more devices or modules including a policy server that receives a request to store data of a user who is an owner of the data and further receives attributes including at least a predetermined number of attributes among a list of contexts, a timestamp, and a validity period for the data, an identity and access management (IAM) application interfacing with the policy server, wherein the policy server sends the name of the owner, the list of contexts, the timestamp, and the validity period to the IAM application and the IAM application creates and sends a signed token containing the name of the owner, the list of contexts, the timestamp, and the validity period to the policy server, and a crypto module that encrypts the data using the attributes in the signed token for subsequent access using attribute based decryption.

In some embodiments, the crypto module uses attribute based encryption for encrypting the data into a database containing Personal Identifiable Information (PII) belonging to the user.

In some embodiments, the policy server requires validation of a predetermined minimum number of attributes among an overall number of attribute to enable access to encrypted data of the user.

In some embodiments, the crypto module is configured to decrypt the encrypted data within a given validity date and when a consent flag is set as true.

In some embodiments, the crypto module is configured to decrypt the encrypted data only if a valid identity of an entity entrusted to access the data is determined and only if a valid context or contexts are found corresponding to a purpose agreed to by the user.

In some embodiments, the system further uses an Identity Provider (IdP) to authenticate an entity trying to access the encrypted data and wherein the IdP receives claims containing attributes that belong to the entity as part of an authentication response. In some embodiments, the system further uses a key generator that trusts claims signed by the IdP to generate a key for the entity after verifying the attributes in the claims and checks the claims with the policy server which provides the consent and context related information and wherein the key decrypts the encrypted data in the database.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1 illustrates a system and method of data privacy compliance including data creation and storage in accordance with the embodiments;
FIG. 2 illustrates another system and method of data privacy compliance including data access in accordance with the embodiments;
FIG. 3 illustrates another system and method of data privacy compliance including consent revocation in accordance with the embodiments;
FIG. 4 illustrates a block diagram and flow for a system and method of data privacy compliance in accordance with the embodiments; and
FIG. 5 illustrates a flow chart of a method of data privacy compliance including data creation and storage in accordance with the embodiments;
FIG. 6 illustrates a flow chart of a method of data privacy compliance including data access in accordance with the embodiments; and
FIG. 7 illustrates a flow chart of a method of data privacy compliance including consent revocation in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

In order to comply with the various data privacy requirements, infrastructure should be in place to safeguard the data and make sure that the data is not used without a user's consent beyond agreed timelines, which usually can be 6 months. After which a fresh consent of the user or data owner needs to be requested in order to use the data. Also the data owner would like to make sure that their data is not shared with other third party cloud service providers without their consent. So sufficient infrastructure and flexibility is needed to effectively cater to the rights of the data owner in a cost effective and automated way so that systems and methods can comply with the various standards (such as GDPR and CCPA) and the data of the user can be secure in the hands of the cloud service providers.

The embodiments can use a standard based approach for encrypting data in a way that is dependent on the attribute of the entity accessing it. In some embodiments, Attribute based encryption is used for encrypting database containing PII information belonging to users.

More particularly, a policy is applied to the data stored in the database of a cloud service provider. The policy can contain detailed information or access structures on how the given database can be accessed. For example, it can contain access structure detailing that at least m of n attributes should be present with the user trying to access the database. In some embodiments, a policy can define limits for the data access with a validity date, such as 6 months. This validity is applied to the dataset. So any given key that is trying to decrypt the data should decrypt it within the given validity date. Otherwise the decryption will not happen. Another policy that can be applied to the data is that the entity accessing the data should have a **consent** flag as true. This flag is obtained by the policy server which contains the consent flags for all the entities trying to access the data. This consent would typically be taken from the user during the registration or data capture process. Although there are no limits to the attributes that can be checked as party of the policy, two other policies can further ideally be applied to the database. One is an **identity of the entity accessing** check and the other is a **context** check. The identity of the entity accessing check will ensure that the identity of the entity is verified before decrypting the data and only the party entrusted to access the data can read or process the data. The context check will determine for what purpose data is being accessed. This will ensure that the various compliances are met during the data access and data is accessed or processed only for the purpose it was agreed to by the user.

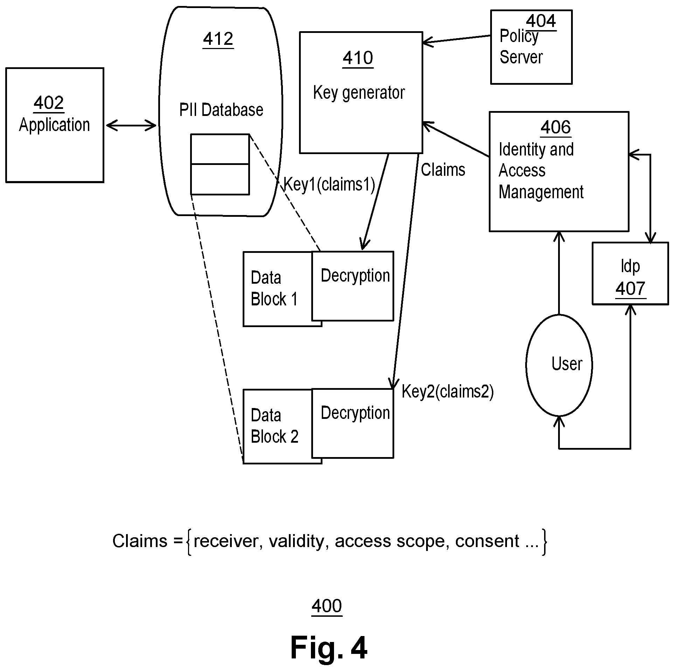

Referring to the system 400 of FIG. 4, an entity trying to access the given data should contain at least m of n given attributes defined in the policy above in a policy server 404. Once the entity is authenticated by an Identity Provider (IdP) 407, the entity receives **Claims** as part of the authentication response. These claims will contain attributes that belong to the entity. The Claims signed by the IdP 407 are trusted by a Key Generator 410 which will generate key for the entity after verifying the attributes contained in the claims provided by the IdP. Once the Key Generator verifies the attributes in the incoming claims and checks it with the policy server 404 which will provide the consent and context related information, the Key Generator 410 will generate a key on the fly that can decrypt the encrypted data in a database 412. In some embodiments, there can be at least 4 attributes in the key generation request, namely identity of the entity, timestamp, consent and context. The policy server 404 provides the consent and context, which it stored during the registration process when the user registered with the service provider. The identity and timestamp will be provided by the claim returned by the IdP 407 via an Identity and Access Management Module 406. The consent attribute will make sure that the entity trying to access the given database 412 has the necessary consent from the data owner (user) to access their PII data. The context attribute signifies the purpose for which the data was retrieved from the user during the registration process. The identity will determine which actual entity is trying to access the data and only the entity which the user entrusted their data with can access it. Further, the entrusted entity cannot transfer that data to another third party without the user's consent. Finally, a timestamp will make sure that the access request is within the validity period defined in the data access policy mentioned above. The Key Generator 410 will generate keys for decryption only when these attributes are valid in the key generation request. Other attributes such as geo-location of the entity accessing the data can also be defined in the policy to add further security and verification. The geo-location can also ensure that data-sovereign requirements are further in compliance.

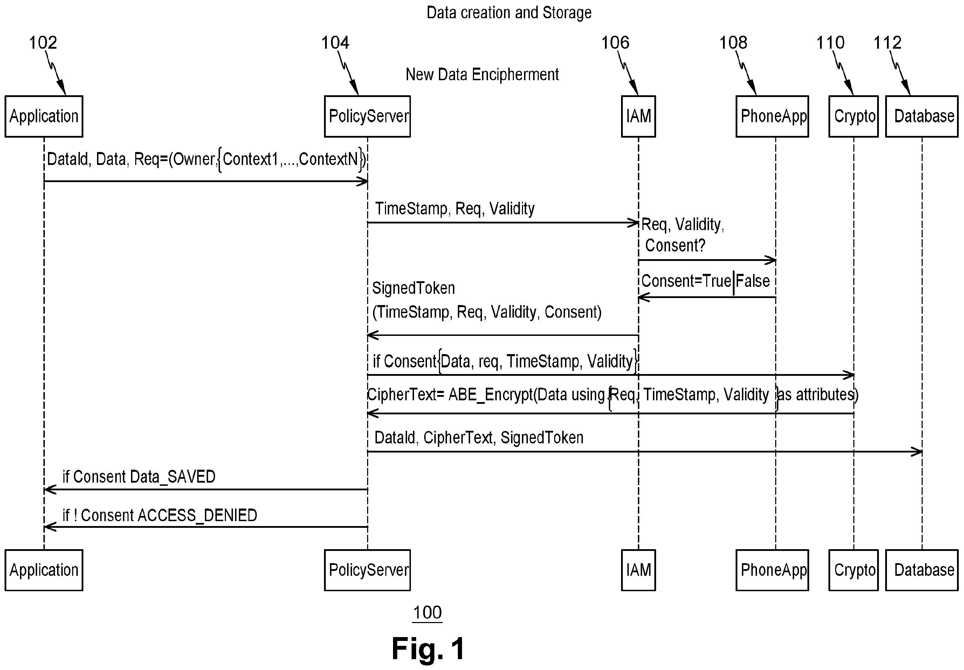

With further reference to FIGs. 1-4, an **Application 102 or 402** can create and access sensitive data belonging to a **User.** The User can provide **Consent** to create and access its data to applications. The user can authenticate and provide consent to an **Identity and Access Management (IAM)** module 106 or 406 in a cloud environment or in an in-premises environment through an application installed on User's phone **(PhoneApp)** 108.

The application 102 requests and provides data to and from a **Policy Server 104.** A **Crypto Module** 110 generates keys for encryption and decryption of data and also encrypts and decrypts the data. Encrypted data (Ciphertext) is saved in and retrieved from a **database 112.**

The **IAM** 106 provides a **SignedToken** to Policy Server 104 containing various **attributes** of data, including consent from user and **validity of data lifetime.** The token is signed with private key of the IAM 106 and its corresponding public key is used to verify the token by Policy Server 104.

Data is encrypted and decrypted using **Attribute Based Encryption (ABE).** The ABE allows different keys to be used for encryption and decryption assigned to different users. The data is encrypted using attributes from SignedToken and can be decrypted if the attributes provided during decryption match conditions formed using boolean functions and range checks on attributes used during encryption.

A Data item is referred with a unique **Datald** saved along with ciphertext data in database 112. Application passes Datald for storage and retrieval of data. It can be some unique hash applicable to domain of use in application.

The application 102 provides a list of allowed **Contexts** at the time of storage. A context is an arbitrary string specifying **scope** of usage of data. When data is accessed, the application 102 provides context in request.

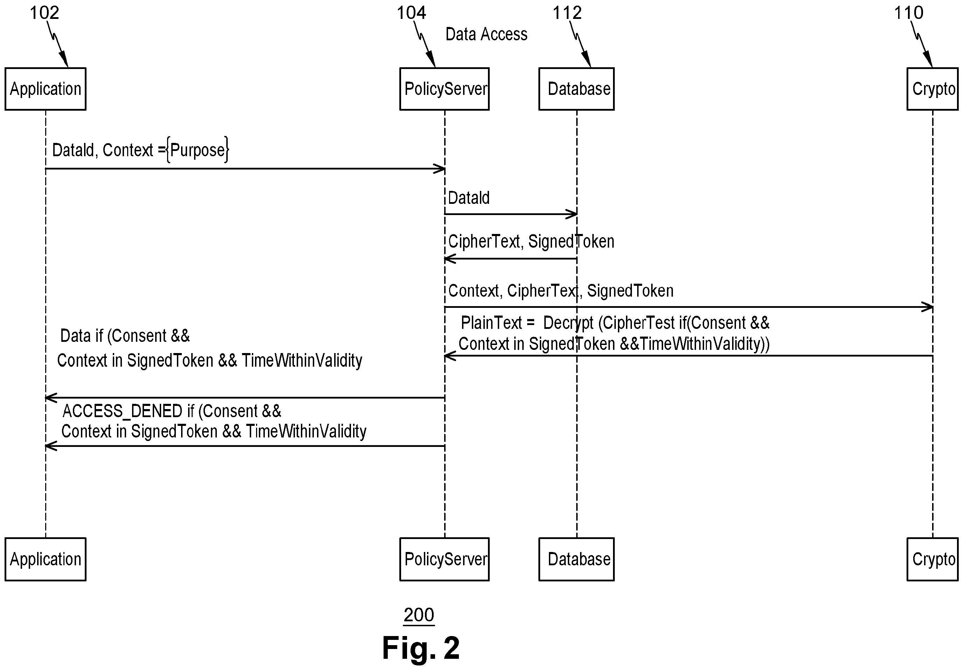

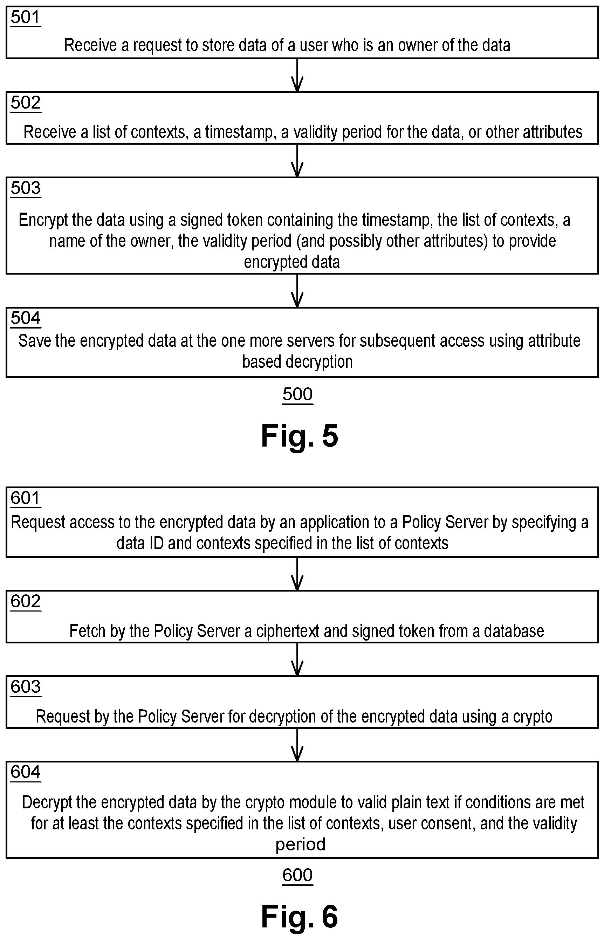

Data is provided to the application 102 only if context in the request matches one of the contexts provided at the time of data storage as further detailed in FIGs. 2 and 6.

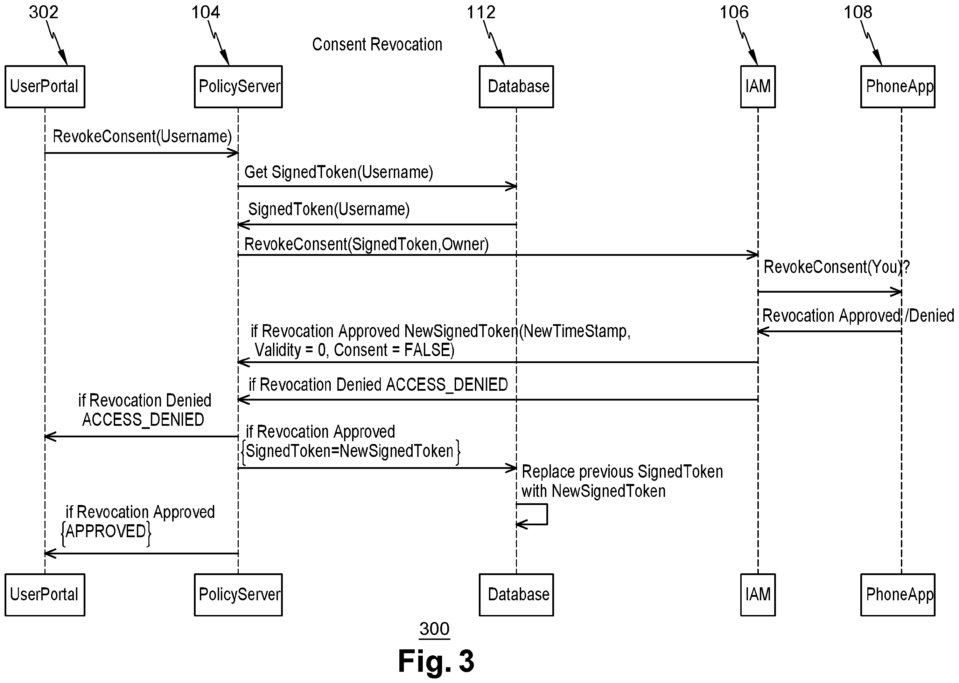

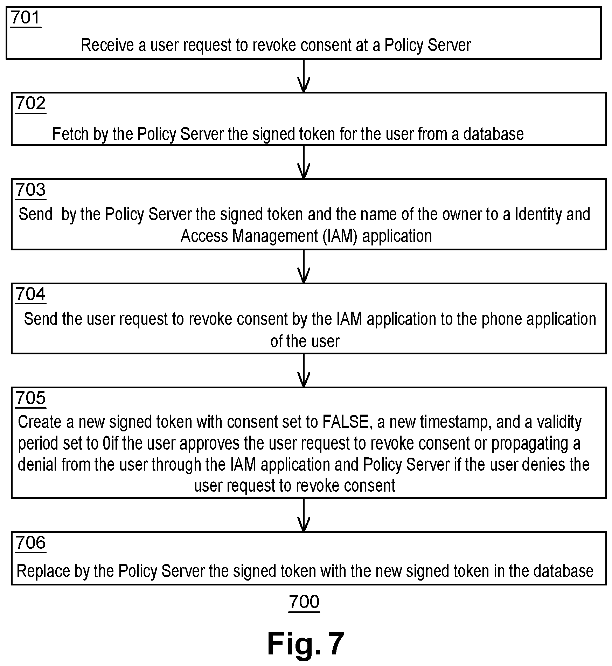

User can request revocation of consent anytime through a **UserPortal** 302 as further detailed in FIGs. 3 and 7.

**Data Creation and Storage** as further detailed in FIGs. 1 and 5 can involve the following steps:
1. Application requests storage of data to PolicyServer specifying Owner (User to whom data belongs), and list of contexts for intended use of data.
2. The PolicyServer sends Owner, list of contexts, a timestamp and a validity period for the data to IAM.
3. IAM forwards requests to User through PhoneApp. The User approves or denies the request.
4. If request is denied, the response is propagated to application.
5. If request is approved, IAM sends a SignedToken containing TimeStamp, Owner, Contexts, Validity and Consent to the PolicyServer.
6. The PolicyServer requests Crypto module to encrypt data using attributes in SignedToken.
7. The Crypto module encrypts data using the attributes in SignedToken through ABE encryption.
8. PolicyServers saves the cipherext, Datald and SignedToken in database and sends DATA_SAVED response to application.

**Data Access** as further detailed in FIGs. 2 and 6 can involve the following steps:
1. Application requests access to data specifying Datald and access Context.
2. PolicyServer fetches Ciphertext and SignedToken from database.
3. PolicyServer requests decryption of data through Crypto module.
4. Crypto module attempts decryption of data using *Context* specified in request, computed remaining validity of data and *Consent* field in SignedToken. Due to mathematical properties of ABE, data will decrypt to valid plaintext only if these conditions are met.
5. If data decrypts successfully, it is passed to application through PolicyServer.

**Consent Revocation** as further detailed in FIGs. 3 and 7 can involve the following steps:
1. User requests revocation of consent through UserPortal.
2. PolicyServer fetched SignedToken for the User from database.
3. PolicyServer sends SignedToken and Owner to the IAM.
4. IAM sends revocation request to PhoneApp of User.
5. User approves or denies the request.
6. If request is denied, response is propagated to UserPortal through IAM and PolicyServer.
7. If request is approved by User, IAM creates a new SignedToken with Consent set to FALSE, new timestamp and validity period set to 0.
8. PolicyServer replaces previous SignedToken with new SignedToken in database.

The embodiments use a standard based approach for satisfying various compliances like GDPR, CCPA and other data regulatory and sovereign requirements. The most important advantage of the embodiments is that it doesn't require any costly infrastructure as it is a standard based solution and inherently secured. It can complement existing Key Management solutions by providing unique and novel ways of access control over databases and implementing encryption using attributes of the entities.

In summary, the embodiments implement access control and encryption using standard based solutions using the various attributes of the entities holding the data. It uses different attributes like consent and validity to encrypt the data to satisfy various compliances.

In the absence of any specific clarification related to its express use in a particular context, where the terms " substantial " or " about " or "usually" in any grammatical form are used as modifiers in the present disclosure and any appended claims (e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, (e.g. , " including, but not limited to "). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A method of providing data privacy compliance at one or more servers, comprising:
one or more processors and memory coupled to the one or more processors, wherein the memory includes computer instructions which when executed by the one or more processors causes the one or more processors at the server to perform the operations of:
receiving a request to store data of a user who is an owner of the data;
receiving a list of contexts, a timestamp, and a validity period for the data;
encrypting the data using a signed token containing the timestamp, the list of contexts, a name of the owner, and the validity period to provide encrypted data; and
saving the encrypted data at the one or more servers for subsequent access using attribute based decryption.

2. The method of claim 1, wherein the data is Personal Identifiable Information (PII) of a user owning the PII.

3. The method of claim 1, wherein an application requests storage of the data to a Policy Sever specifying the name of the owner and the list of contexts for intended use of the data.

4. The method of claim 3, wherein the Policy Server sends the name of the owner, list of contexts, the timestamp, and the validity period for the data to an Identity and Access Management (IAM) application.

5. The method of claim 4, wherein the IAM application is stored on a cloud server or in-premises server via a phone application, which is used by the user to approve or deny the request.

6. The method of claim 5, wherein the IAM application sends the signed token to the Policy Server if the user approves the request and if the user issues a denial to the request, the denial is propagated to the application.

7. The method of claim 6, wherein the Policy Server requests a crypto module to encrypt the data using attributes in the signed token if the user approves the request and the crypto module encrypts the data using the attributes in the signed token using Attribution Based Encryption (ABE).

8. The method of claim 7, wherein the Policy Server saves a ciphertext, a data ID, and the signed token in a database and informs the application that the encrypted data is saved.

9. The method of claim 8, wherein the method further comprises the steps of accessing the encrypted data by:
requesting access to the encrypted data by the application to the Policy Server by specifying the data ID and contexts specified in the list of contexts;
fetching by the Policy Server the ciphertext and signed token from the database;
requesting by the Policy Server for decryption of the encrypted data using the crypto module;
decrypting the encrypted data by the crypto module to valid plain text if conditions are met for at least the contexts specified in the list of contexts, user consent, and the validity period; and
passing the valid plain text to the application via the Policy Server.

10. The method of claim 8, wherein the method further comprises the steps of revoking consent by:
receving a user request to revoke consent at the Policy Server;
fetching by the Policy Server the signed token for the user from the database;
sending by the Policy Server the signed token and the name of the owner to the IAM application;
sending the user request to revoke consent by the IAM application to the phone application of the user;
creating a new signed token with consent set to FALSE, a new timestamp, and a validity period set to 0 if the user approves the user request to revoke consent or propagating a denial from the user through the IAM application and Policy Server if the user denies the user request to revoke consent; and
replacing by the Policy Server the signed token with the new signed token in the database.

11. A system of providing data privacy compliance at one or more servers, comprising:
one or more processors and memory coupled to the one or more processors, wherein the memory includes computer instructions which when executed by the one or more processors causes the one or more processors at the one or more servers to perform the operations of:
receiving a request to store data of a user who is an owner of the data;
receiving a list of contexts, a timestamp, and a validity period for the data;
encrypting the data using a signed token containing the timestamp, the list of contexts, a name of the owner, and the validity period to provide encrypted data; and
saving the encrypted data at the one or more servers for subsequent access using attribute based decryption.

12. The system of claim 11, wherein the system further comprises the steps of accessing the encrypted data by:
requesting access to the encrypted data by an application to a Policy Server by specifying a data ID and contexts specified in the list of contexts;
fetching by the Policy Server a ciphertext and signed token from a database;
requesting by the Policy Server for decryption of the encrypted data using a crypto module;
decrypting the encrypted data by the crypto module to valid plain text if conditions are met for at least the contexts specified in the list of contexts, user consent, and the validity period; and
passing the valid plain text to the application via the Policy Server.

13. The system of claim 11, wherein the system further comprises the steps of revoking consent by:
receving a user request to revoke consent at a Policy Server;
fetching by the Policy Server the signed token for the user from a database;
sending by the Policy Server the signed token and the name of the owner to a Identity and Access Management (IAM) application;
sending the user request to revoke consent by the IAM application to the phone application of the user;
creating a new signed token with consent set to FALSE, a new timestamp, and a validity period set to 0 if the user approves the user request to revoke consent or propagating a denial from the user through the IAM application and Policy Server if the user denies the user request to revoke consent; and
replacing by the Policy Server the signed token with the new signed token in the database.

14. A system of providing data privacy compliance, comprising:
one or more processors and memory coupled to the one or more processors, wherein the memory includes computer instructions which when executed by the one or more processors causes the one or more processors at one or more servers to perform certain operations at one or more devices or modules comprising:
a policy server that receives a request to store data of a user who is an owner of the data and further receives attributes including at least a predetermined number of attributes among a list of contexts, a timestamp, and a validity period for the data;
an identity and access management (IAM) application interfacing with the policy server, wherein the policy server sends the name of the owner, the list of contexts, the timestamp, and the validity period to the IAM application and the IAM application creates and sends a signed token containing the name of the owner, the list of contexts, the timestamp, and the validity period to the policy server; and
a crypto module that encrypts the data using the attributes in the signed token for subsequent access using attribute based decryption.

15. The system of claim 14, wherein the crypto module uses attribute based encryption for encrypting the data into a database containing Personal Identifiable Information (PII) belonging to the user.

16. The system of claim 14, wherein the policy server requires validation of a predetermined minimum number of attributes among an overall number of attribute to enable access to encrypted data of the user.

17. The system of claim 14, wherein the crypto module is configured to decrypt the encrypted data within a given validity date and when a consent flag is set as true.

18. The system of claim 14, wherein the crypto module is configured to decrypt the encrypted data only if a valid identity of an entity entrusted to access the data is determined and only if a valid context or contexts are found corresponding to a purpose agreed to by the user.

19. The system of claim 14, wherein the system further uses an Identity Provider (IdP) to authenticate an entity trying to access the encrypted data and wherein the IdP receives claims containing attributes that belong to the entity as part of an authentication response..

20. The system of claim 19, wherein the system further uses a key generator that trusts claims signed by the IdP to generate a key for the entity after verifying the attributes in the claims and checks the claims with the policy server which provides the consent and context related information and wherein the key decrypts the encrypted data in the database.
